(19) Europäisches Patentamt
European Patent Office
Office européen des brevets

(11) Veröffentlichungsnummer: **0 200 070**
**B1**

# (12) EUROPÄISCHE PATENTSCHRIFT

(45) Veröffentlichungstag der Patentschrift: **04.10.89**

(51) Int. Cl.⁴: **C 08 F 8/14,** C 08 G 18/62

(21) Anmeldenummer: **86105092.0**

(22) Anmeldetag: **14.04.86**

## (54) Verfahren zur Herstellung von Hydroxylgruppen aufweisenden Polymerisaten und ihre Verwendung zur Herstellung von Polyurethankunststoffen.

(30) Priorität: **26.04.85 DE 3515092**

(43) Veröffentlichungstag der Anmeldung: **05.11.86 Patentblatt 86/45**

(45) Bekanntmachung des Hinweises auf die Patenterteilung: **04.10.89 Patentblatt 89/40**

(84) Benannte Vertragsstaaten: **BE DE FR GB IT NL**

(56) Entgegenhaltungen:
**DE-B-1 248 660**
**GB-A-771 569**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Dietrich, Manfred, Dr., Dresdener-Strasse 16, D-5090 Leverkusen (DE)**
Erfinder: **Pedain, Josef, Dr., Haferkamp 6, D-5000 Köln 80 (DE)**
Erfinder: **König, Klaus, Dr., Zum Hahnenberg 40, D-5068 Odenthal (DE)**
Erfinder: **Höhlein, Peter, Dr., Windmühlenweg 3 E, D-4152 Kempen 3 (DE)**

**EP 0 200 070 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die vorliegende Erfindung betrifft ein neues Verfahren zur Herstellung von Hydroxylgruppen aufweisenden Polymerisaten durch Alkoxylierung von Copolymerisaten der Acrylsäure und/oder Methacrylsäure mit anderen olefinischen Verbindungen unter Verwendung spezieller schwefelhaltiger Katalysatoren sowie die Verwendung dieser Polymerisate als Reaktionspartner für organische Polyisocyanate bei der Herstellung von Polyurethankunststoffen insbesondere -lackierungen und -beschichtungen.

Hydroxylgruppenhaltige Polymerisatharze auf Basis olefinisch ungesättigter Monomerer und ihre Verwendung als Bindemittel für Beschichtungsmittel sind in einer Vielzahl von Publikationen beschrieben (vgl. z. B. DE-OS-2 460 329, DE-AS-1 038 754, US-PS-3 002 959, US-PS-3 375 227, GB-PS-1 515 868).

Diese bekannten, Hydroxylgruppen aufweisenden Polymerisatharze werden im allgemeinen durch Mitverwendung von Hydroxyalkylestern der Acrylsäure und/oder Methacrylsäure als Comonomere hergestellt. Diese Verfahrensweise ist umständlich, da diese speziellen, Hydroxylgruppen aufweisenden Comonomeren vorab in einem kostenaufwendigen Verfahren hergestellt werden müssen.

Es war daher die der Erfindung zugrundeliegende Aufgabe, ein neues, einfaches Verfahren zur Verfügung zu stellen, welches die Herstellung von Hydroxylgruppen aufweisenden Polymerisatharzen gestattet, die sich ebensogut wie die bekannten Hydroxylgruppen aufweisenden Polymerisatharze des genannten Standes der Technik in Kombination mit organischen Polyisocyanaten zur Herstellung von hochwertigen Polyurethankunststoffen, insbesondere Beschichtungen verarbeiten lassen.

Diese Aufgabe konnte durch die Bereitstellung des nachstehend näher beschriebenen erfindungsgemäßen Verfahrens gelöst werden, bei welchem Carboxylgruppen aufweisende Polymerisatharze durch eine Alkoxylierungsreaktion in die entsprechenden Hydroxylgruppen aufweisenden Polymerisatharze überführt werden. Der Vorteil des erfindungsgemäßen Verfahrens gegenüber dem aufgezeigten Stand der Technik ist darin zu sehen, daß bei der Herstellung der Polymerisatharze in einem separaten Reaktionsschritt vorab kostenaufwendig hergestellte Hydroxyalkylester der Acrylsäure bzw. Methacrylsäure nicht eingesetzt werden müssen. Vielmehr handelt es sich bei den erfindungsgemäß zum Einsatz gelangenden Ausgangsmaterialien um Copolymerisate der genannten Säuren mit anderen olefinisch ungesättigten Monomeren.

Es war zwar bereits bekannt, daß Carboxylgruppen aufweisende Verbindungen in wäßrigem oder organischem Milieu oder aber in Substanz mit Alkylenoxiden wie Ethylenoxid, Propylenoxid oder 1,2-Butylenoxid in Gegenwart von basischen Katalysatoren wie tert. Aminen, Tetraalkylammoniumhydroxiden, Alkali- oder Erdalkalioxiden bzw. -hydroxiden, basischen Ionenaustauschern oder auch in Gegenwart von einfachen Thioethern wie z. B. Thiodiglykol als Katalysatoren zu den entsprechenden Hydroxyalkylgruppen aufweisenden Verbindungen umgesetzt werden können (vgl. z. B. US-PS-3 116 270, BE-PS-634 310, BE-PS-590 775, GB-PS-771 569, GB-PS-940 766, GB-PS-1 002 343, DE-OS-3 148 022 oder DE-AS-1 248 660). Die basischen Substanzen beschleunigen jedoch nicht nur die Reaktion von Carboxylgruppen mit Epoxiden sondern daneben auch Umesterungs- und Veresterungsreaktionen, sowie die Anlagerung von Epoxiden an die Hydroxyalkylgruppen. Dies führt bei der Alkoxylierung von Carboxylgruppen aufweisenden Polymerisaten dazu, daß zur weitgehenden Abreaktion der Carboxylgruppen wesentlich mehr als die äquivalente Menge des Epoxids benötigt wird, daß die Endprodukte einen unerwünscht hohen Gehalt an Ethergruppen enthalten, und daß zwischen den Polymerketten Verknüpfungen auftreten, die zu unerwünschten Viskositätssteigerungen bis hin zu Verquallungen führen können. Daneben ist besonders bei aminischen Katalysatoren mit störenden Verfärbungen zu rechnen. Die Verwendung von einfachen Thioethern, wie z. B. Thiodiglykol (DE-AS-1 248 660) als Katalysator ermöglicht zwar die Alkoxylierung von einfachen Carbonsäuren wie z. B. Ameisensäure, Essigsäure, Adipinsäure oder Benzoesäure, um nur einige Beispiele zu nennen, jedoch wurden derartige einfache Thioether bislang noch nicht für die Alkoxylierung von Carboxylgruppen aufweisenden Copolymerisaten empfohlen. Die in der DE-AS-1 248 660 als Katalysatoren empfohlenen Thioether wären für diesen Einsatzweck auch weitgehend unbrauchbar, da die meist übelriechenden Thioverbindungen aus den Verfahrensprodukten nicht entfernt werden könnten, so daß diese für den genannten Einsatzzweck (Herstellung von Polyurethanlacken) weitgehend unbrauchbar wären.

Die erfindungsgemäße Lösung der gestellten Aufgabe besteht insbesondere darin, daß man die Alkoxylierung der Carboxylgruppen aufweisenden Polymerisate in Gegenwart ausgewählter Katalysatoren durchführt.

Gegenstand der Erfindung ist ein Verfahren zur Herstellung von Hydroxylgruppen aufweisenden Copolymerisaten durch Umsetzung von Carboxylgruppen enthaltenden Copolymerisaten, die Acrylsäure und/oder Methacrylsäure einpolymerisiert enthalten, mit Alkylenoxiden in einem Äquivalentverhältnis von Alkylenoxid zu Carboxylgruppen von 0,5 : 1 bis 1,5 : 1 in Gegenwart von 0,1 bis 3 Gew.-%, bezogen auf das gesamte Reaktionsgemisch, an Katalysatoren, dadurch gekennzeichnet, daß man als Katalysatoren

a1) zwei Thioethergruppen aufweisende Anlagerungsprodukte von (i) Mercaptoalkonolen der Formel

OH
|
R-CH-$CH_2$-SH

an (ii) zweifach ungesättigte Terpenkohlenwasserstoffe, und/oder

a2) Kondensationsprodukte eines maximalen Molekulargewichts von 5000 und einem Gehalt an Schwefel in

Form von Thoethergruppen von 15 bis 30 Gew.-% derartiger Anlagerungsprodukte mit sich selbst oder mit anderen mehrwertigen Alkoholen des Molekulargewichtsbereichs 62 bis 200, ausgewählt aus der Gruppe bestehend aus gegebenenfalls Thioetherbrücken aufweisenden Alkandiolen und dreiwertigen aliphatischen Alkoholen, mit der Maßgabe, daß die schwefelfreien mehrwertigen Alkohole, falls überhaupt, in einer Menge von bis zu 50 Hydroxyläquivalent-%, bezogen auf alle bei der Kondensationsreaktion einzusetzenden mehrwertigen Alkohole, eingesetzt werden, und/oder

b) höhermolekulare Thioether des Molekulargewichtsbereichs 500 bis 5000, wie sie durch Kondensation von Thiodiglykolen der Formel:

$$\begin{array}{c} \quad OH \qquad\qquad\qquad OH \\ \quad | \qquad\qquad\qquad\quad | \\ R'\text{-}CH\text{-}CH_2\text{-}S\text{-}CH_2\text{-}CH\text{-}R' \end{array}$$

gegebenenfalls im Gemisch mit bis zu 50 Hydroxyläquivalent-%, bezogen auf dieses Gemisch, anderer Polyhydroxylverbindungen des Molekulargewichtsbereichs 62 bis 200 der unter a2) genannten Art erhalten werden,

verwendet, wobei

R und R' für gleiche oder verschiedene Reste stehen und Wasserstoff oder einen Methylrest bedeuten.

Gegenstand der Erfindung ist auch die Verwendung der nach diesem Verfahren erhaltenen, Hydroxylgruppen aufweisenden Alkoxylierungsprodukte als Reaktionspartner für organische Polyisocyanate in gegebenenfalls mit Blockierungsmitteln für Isocyanatgruppen blockierter Form bei der Herstellung von Polyurethankunststoffen, insbesondere von hochwertigen Polyurethan-Beschichtungen.

Bei den beim erfindungsgemäßen Verfahren einzusetzenden Polymerisatharzen handelt es sich um Copolymerisate von Acrylsäure und/oder Methacrylsäure mit anderen olefinisch ungesättigten Verbindungen.

Geeignete Comonomere sind beispielsweise die Alkylester der Acrylsäure und/oder Methacrylsäure mit 1 bis 12, vorzugsweise 1 bis 4 Kohlenstoffatomen im Alkylrest, wie z. B. Methyl-, Ethyl-, n-Propyl-, n-Butyl oder n-Dodecyl-acrylat und/oder -methacrylat, Acrylnitril, Methacrylnitril und/oder Styrol. Die Mitverwendung von Hydroxyalkylestern der Acrylsäure und/oder der Methacrylsäure ist aus den obengenannten Gründen weniger bevorzugt. Besonders gut geeignete Ausgangsmaterialien für das erfindungsgemäße Verfahren sind Copolymerisate auf Basis von

7 bis 40 Gew.-% Acrylsäure und/oder Methacrylsäure,

0 bis 88 Gew.-% Styrol, Acrylnitril und/oder Methacrylnitril und

5 bis 80 Gew.-% Acrylsäure- und/oder Methacrylsäurealkylester der beispielhaft genannten Art, wobei sich die genannten Prozentsätze auf die Gesamtmenge des bei der Herstellung der Copolymerisate eingesetzten Monomerengemischs beziehen und sich jeweils zu 100 ergänzen. Die bevorzugten Copolymerisate weisen im allgemeinen ein mittleres Molekulargewicht $M_{GPC}$ von 1 000 bis 80 000 vorzugsweise 1 000 bis 40 000, eine molekulare Uneinheitlichkeit U von 0,5 bis 15, vorzugsweise 0,5 bis 10 und Säurezahlen von 50 bis 300, vorzugsweise 80 bis 200 mg/KOH/g auf.

Die Herstellung solcher Polymerisatharze ("Polyacrylatharze") kann durch Polymerisation nach üblichen Verfahren, vorzugsweise in Lösung durchgeführt werden.

Als Lösungsmittel kommen beispielsweise Aromaten wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösungsmittel wie Methylenchlorid oder Trichlormonofluorethan in Betracht. Falls die beispielhaft genannten apolaren Lösungsmittel ein zu geringes Lösungsvermögen aufweisen, werden sie vorteilhaft in Abmischung mit den beispielhaft genannten polaren Lösungsmitteln eingesetzt.

Die Herstellung der Polyacrylatharze kann entweder kontinuierlich oder diskontinuierlich durchgeführt werden. Wenn man in einen Polymerisationsreaktor gleichmäßig und kontinuierlich die Monomermischung und den Initiator eindosiert und gleichzeitig die entsprechende Menge Polymerisat kontinuierlich abführt, so stellt sich nach einer relativ kurzen Anfahrperiode im Reaktor ein stationärer Zustand ein.

Stationäre Bedingungen liegen dann vor, wenn sich die Konzentrationen der Reaktionspartner im Laufe der Zeit nicht ändern. In diesem Fall ist die Herstellung chemisch einheitlicher Copolymerer möglich. Chemisch nahezu einheitliche Copolymerisate können aber auch hergestellt werden, wenn man die Reaktionsmischung mit konstanter Geschwindigkeit in einen Rührkessel einlaufen läßt, ohne das Polymerisat abzuführen.

Geeignete Initiatoren zur Herstellung der Polyacrylatharze sind solche Verbindungen, deren Halbwertzeiten des Radikalzerfalls bei 80 bis 180°C zwischen 0,01 und 400 Minuten liegen. Im allgemeinen erfolgt die Copolymerisationsreaktion im zuletztgenannten Temperaturbereich, vorzugsweise zwischen 100°C und 160°C, unter einem Druck von $10^3$ bis $2 \cdot 10^4$ mbar, wobei sich die genaue Temperatur nach der Art des Initiators richtet. Die Initiatoren werden in Mengen von 0,05 bis 6 Gew.-%, bezogen auf die Gesamtmenge an Monomeren, eingesetzt. Im allgemeinen werden die eingesetzten Monomeren zu mindestens 98 % umgesetzt.

Geeignete Initiatoren sind z. B. aliphatische Azoverbindungen wie Azoisobutyronitril sowie Peroxide wie z. B. Dibenzoylperoxid, tert.-Butylperpivalat, tert.-Butylper-2-ethylhexanoat, tert.-Butylperbenzoat, tert.-Butylhydroperoxid, Di-tert.-butylperoxid, t-Butylperoctoat, Cumolhydroperoxid sowie Dicyclohexyl- und Dibenzylperoxydicarbonat.

Zur Regelung des Molekulargewichtes des Acrylatharzes können übliche Regler eingesetzt werden, wie z. B. n-Dodecylmercaptan, Diisopropylxanthogendisulfid, Di(methylentrimethylolpropan)xanthogendisulfid und Mercaptoethanol. Besonders bevorzugt ist wegen seiner Hydroxygruppe Mercaptoethanol. Die Regler werden in Mengen von 0,1 bis 3 Gew.-%, bezogen auf das Monomerengemisch, zugegeben.

Die Copolymerisatharze weisen die bereits obengenannten Eigenschaften auf. Die in diesem Zusammenhang genannte molekulare Uneinheitlichkeit U (= Heterogenitätsfaktor U) ist definiert durch die Gleichung:

$U = (M_w/M_n) - 1$
wobei

$M_w$ Gewichtsmittel
$M_n$ Zahlenmittel des Molekulargewichts
sind.

Dem Fachmann ist bekannt, daß Produkte mit gleichem mittlerem Molekulargewicht (Zahlenmittel $M_n$), aber verschiedener molekularer Uneinheitlichkeit unterschiedliche Lösungsviskositäten besitzen. Das Produkt mit der größeren Uneinheitlichkeit besitzt immer eine größere Lösungsviskosität, da hochmolekulare Anteile einen wesentlich größeren Beitrag zur Viskosität liefern als die gleiche Menge niedermolekularer Anteile. Eine breite Molekulargewichtsverteilung bedeutet außerdem, daß die Anzahl der Reaktivgruppen pro Molekül und damit die Reaktivität der einzelnen Ketten große Unterschiede aufweist.

Für das erfindungsgemäße Verfahren geeignete Alkylenoxide sind beliebige organische Verbindungen, die die Struktureinheit

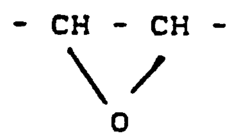

aufweisen. In Betracht kommen somit beliebige Verbindungen der Formel

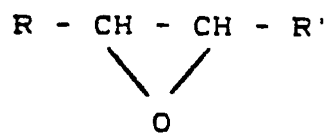

für welche R und R' für gleiche oder verschiedene Reste stehen und Wasserstoff, Alkylgruppen mit 1 bis 16 Kohlenstoffatomen, die auch zusammen mit den beiden Kohlenstoffatomen der Epoxidgruppe eine Cycloalkylgruppe mit 5 bis 12 Kohlenstoffatomen bilden können oder Arylgruppen mit 6 bis 12 Kohlenstoffatomen bedeuten, wobei die genannten Reste auch Heteroatome bzw. funktionelle Substituenten, insbesondere Hydroxylsubstituenten aufweisen können. Gut geeignet sind beispielsweise Ethylenoxid, Propylenoxid, 1,2-Butylenoxid, 2,3-Butylenoxid, Styroloxid, Cyclohexenoxid, Glycidylalkohol oder Versaticsäureglycidylester. Bevorzugt werden Ethylenoxid, Propylenoxid, Glycidylalkohol oder Gemische derartiger Alkylenoxide eingesetzt. Besonders bevorzugt werden Ethylenoxid und/oder Propylenoxid verwendet.

Als Katalysatoren für die Alkoxylierungsreaktion können die bereits oben unter a) und b) genannten Thioether eingesetzt werden.

Die unter a) genannten Verbindungen stellen a1) zwei Thioethergruppen aufweisende Anlagerungsprodukte von Mercaptoalkanolen der bereits obengenannten allgemeinen Formel an zweifach ungesättigte Terpenkohlenwasserstoffe oder a2) Kondensationsprodukte eines maximalen Molekulargewichts von 5 000 derartiger Anlagerungsprodukte mit sich selbst oder mit anderen mehrwertigen Alkoholen des Molekulargewichtsbereichs 62 bis 200 dar, wobei die genannten "anderen mehrwertigen Alkohole" bei der Kondensationsreaktion in einer Menge von bis zu 50 Hydroxyläquivalent-%, bezogen auf das bei der Kondensationsreaktion einzusetzende Reaktionsgemisch, mitverwendet werden können.

Geeignete Mercaptoalkanole sind 1-Mercapto-2-hydroxypropan und insbesondere 1-Mercapto-2-hydroxyethan (Mercaptoethanol). Geeignete, zweifach ungesättigte Terpenkohlenwasserstoffe sind beispielsweise die natürlich vorkommenden Derivate der Menthadiene wie z. B. α-Terpinen, γ-Terpinen, Terpinolen, α-Phelladren, β-Phelladren und, besonders bevorzugt, Limonen. Die beispielhaft genannten, zweifach ungesättigten Terpenkohlenwasserstoffe können sowohl in der (+)- als auch in der (-)- als auch in der Racemat-Form eingesetzt werden. Vorzugsweise werden die natürlichen Racemate verwendet. Auch das konstitutionell dem Limonen entsprechende Dipenten, welches durch Dimerisation von Isopren zugänglich ist, kann erfindungsgemäß verwendet werden.

Die Herstellung der Anlagerungsprodukte erfolgt durch einfaches Verrühren des Mercaptoalkanols mit dem zweifach ungesättigten Terpenkohlenwasserstoff bei Raumtemperatur, vorzugsweise unter gleichzeitigem Einleiten von Luft (Katalyse durch Luftsauerstoff), wobei pro Mol des zweifach ungesättigten Terpenkohlenwasserstoffs mindestens 2 Mol Mercaptoalkanol zum Einsatz gelangen, und wobei ein gegebenenfalls über diesem Molverhältnis liegender Überschuß an Mercaptoalkanol im Anschluß an die Anlagerungsreaktion im Vakuum abdestilliert wird.

Die anstelle derartiger Anlagerungsverbindungen oder im Gemisch mit derartigen Anlagerungsverbindungen als Katalysatoren einzusetzenden Kondensationsprodukte weisen einen Gehalt an Schwefel in Form von Thioethergruppen von 15 bis 30 Gew.-% auf und werden durch Kondensation der Anlagerungsprodukte mit sich selbst oder mit anderen mehrwertigen Alkoholen des Molekulargewichtsbereichs 62 bis 200 hergestellt. Die Kondensationsreaktion erfolgt vorzugsweise in Gegenwart der in DE-AS-1 039 232 als Katalysatoren genannten Phosphorsäuren und besonders bevorzugt in Gegenwart von phosphoriger Säure als Katalysator. Die Kondensationsreaktion wird im allgemeinen im Temperaturbereich von 120 bis 200° C durchgeführt.

Bei den gegebenenfalls mitzuverwendenden (anderen mehrwertigen Alkoholen) handelt es sich um gegebenenfalls Thioetherbrücken aufweisende Alkandiole oder um dreiwertige aliphatische Alkohole des genannten Molekulargewichtsbereichs wie z. B. Ethylenglykol, 1,2- und 1,3-Dihydroxypropan, 1,2-, 2,3- oder 1,4-Dihydroxybutan, 1,6-Hexandiol, Glycerin, Trimethylolpropan, Bis-(2-hydroxyethyl)-thio-ether und/oder Bis-(2-hydroxypropyl)-thioether. Diese schwefelfreien mehrwertigen Alkohole können, falls überhaupt, in einer Menge von bis zu 50 Hydroxyläquivalent-%, bezogen auf alle bei der Kondensationsreaktion einzusetzende, mehrwertige Alkohole, mitverwendet werden. Die beispielhaft genannten schwefelhaltigen Diole können bei der Herstellung der Kondensationsprodukte, entsprechend den oben gemachten Angaben bezüglich des Schwefelgehalts, auch in über 50 Hydroxyläquivalent-% liegenden Mengen mitverwendet werden. Das Molekulargewicht der Kondensationsprodukte beträgt maximal 5000. Es wird durch geeignete Wahl der Reaktionszeit festgelegt und durch Bestimmung der abdestillierten Wassermenge oder der Hydroxylzahl des Reaktionsprodukts kontrolliert.

Die oben unter b) genannten, beim erfindungsgemäßen Verfahren einzusetzenden Katalysatoren stellen höhermolekulare Thioether des Molekulargewichtsbereichs 500 bis 5000 dar, wie sie durch Kondensation von Verbindungen der Formel:

$$R'-\underset{\displaystyle |}{\overset{\displaystyle OH}{CH}}-CH_2-S-CH_2-\overset{\displaystyle OH}{\underset{}{CH}}-R'$$

mit sich selbst oder mit anderen, mehrwertigen Alkoholen des Molekulargewichtsbereichs 62 bis 200 erhalten werden können. Bei den Dihydroxy-polyethern der zuletzt genannten allgemeinen Formel handelt es sich um solche, für welche R' für Wasserstoff oder eine Methylgruppe steht, d.h. um 2,2-Dihydroxy-diethylthioether (Thiodiglykol) oder um 2,2-Dihydroxy-di-n-propylthioether. Vorzugsweise wird Thiodiglykol eingesetzt. Bei den "anderen mehrwertigen Alkoholen des Molekulargewichtsbereichs 62 bis 200" handelt es sich in diesem Fall um schwefelfreie aliphatische, mehrwertige Alkohole der bereits unter a) beispielhaft genannten Art. Auch hier werden die "anderen mehrwertigen Alkohole", falls überhaupt, in einer Menge von bis zu 50 Hydroxyläquivalent-%, bezogen auf die Gesamtmenge des bei der Kondensationsreaktion einzusetzenden Reaktionsgemischs, eingesetzt.

Die Kondensationsreaktion zur Herstellung der Katalysatoren b) erfolgt in völliger Analogie zu den oben gemachten Ausführungen bezüglich der Herstellung der unter a) genannten Kondensationsprodukte. Die Kondensationsreaktion wird bei Erreichen eines mittleren Molekulargewichts der Kondensationsprodukte von 500 bis 5000 abgebrochen. Auch hier wird das Molekulargewicht durch Bestimmung der abdestillierten Wassermenge oder der Hydroxylzahl des Reaktionsgemischs kontrolliert.

Bei der Durchführung des erfindungsgemäßen Verfahrens kommen die unter a) und/oder unter b) genannten Katalysatoren in einer Menge von 0,1 bis 3 Gew.-%, vorzugsweise 0,3 bis 1,5 Gew.-%, bezogen auf das gesamte Reaktionsgemisch zum Einsatz.

Das erfindungsgemäße Verfahren wird vorzugsweise in Gegenwart eines Lösungsmittels bzw. Lösungsmittelgemisches durchgeführt, kann aber auch in Substanz durchgeführt werden. Geeignete Lösungsmittel sind beispielsweise die oben im Zusammenhang mit der Herstellung der Carboxylgruppen aufweisenden Polymerisate genannten. Besonders bevorzugt werden 40- bis 80-gew.-%-ige Lösungen der Polymerisate eingesetzt. Die Alkoxylierungsreaktion wird im allgemeinen bei einer Temperatur von 60 bis 160°C, vorzugsweise zwischen 100 bis 140°C, gegebenenfalls unter Druck, durchgeführt. Im allgemeinen geht man so vor, daß man einer, beispielsweise 40 bis 80 gew.-%-igen Lösung eines Carboxylgruppen aufweisenden Polymerisats nach Zugabe des schwefelhaltigen Katalysators, während eines Zeitraumes von 0,2 bis 10 Stunden, vorzugsweise 1 bis 5 Stunden, kontinuierlich oder diskontinuierlich das Alkylenoxid bzw. das Alkylenoxidgemisch im obengenannten Temperaturbereich zudosiert und anschließend das Reaktionsgemisch nach 2 bis 15 Stunden, vorzugsweise 4 bis 10 Stunden im gleichen Temperaturbereich nachreagiert. Danach werden evtl. noch vorhandenes Alkylenoxid durch Abdestillieren oder unter Rückfluß im Vakuum entfernt. Die Menge des Alkylenoxids wird bei der Umsetzung so gewählt, daß das Äquivalentverhältnis von Alkylenoxid zu Carboxylgruppen bei 0,5 : 1 bis 1,5 : 1, vorzugsweise bei 0,8 : 1 bis 1,2 : 1 liegt.

Im allgemeinen ist man bei der Durchführung des erfindungsgemäßen Verfahrens bestrebt, einerseits eine möglichst selektive Veresterung der Carboxylgruppen unter Bildung von Hydroxyalkylestergruppen zu erreichen, und andererseits die Bildung von meist unerwünschten Ethergruppen aufweisenden Umsetzungsprodukten (durch Alkoxylierung von Hydroxylgruppen) ebenso wie die mögliche Bildung von Estergruppen durch eine Veresterungsreaktion zwischen im Reaktionsgemisch vorliegenden Hydroxyl- und Carboxylgruppen weitgehend auszuschließen.

Das erfindungsgemäße Verfahren gestattet in der Tat eine weitgehend selektive Überführung der

Carboxylgruppen in Hydroxyalkylestergruppen, so daß bei der besonders bevorzugten Verwendung der Alkylenoxide in, bezogen auf die Säuregruppen, äquivalenten Mengen Umsetzungsprodukte mit hoher Hydroxylzahl und niedriger Säurezahl resultieren.

Die erfindungsgemäßen Verfahrensprodukte stellen wegen ihres hohen Gehalts an Hydroxyl- und ihres niedrigen Gehalts an Carboxylgruppen wertvolle Reaktionspartner für organische Polyisocyanate bei der Herstellung von Polyurethankunststoffen, insbesondere Polyurethanlacken dar. Da durch die erfindungsgemäße Alkoxylierungsreaktion das Molekulargewicht der oligomeren bzw. polymeren Ausgangsverbindungen nicht nennenswert erhöht wird, liegen die Molekulargewichte der auf den oligomeren bzw. polymeren Ausgangsmaterialien basierenden erfindungsgemäßen Verfahrensprodukte innerhalb der bezüglich der Ausgangsmaterialien obengenannten Bereiche. Die Hydroxylzahlen der erfindungsgemäßen Verfahrensprodukte auf Basis der genannten oligomeren oder polymeren Ausgangsverbindungen liegen im allgemeinen innerhalb des Bereichs von 40 bis 290, vorzugsweise 70 bis 190 (mg KOH/g Substanz) und die Säurezahlen zwischen 1 und 25 (mg KOH/g Substanz), wobei jedoch gesagt werden kann, daß aufgrund der erfindungsgemäßen Modifizierung die Säurezahl im allgemeinen weniger als die Hälfte der Säurezahl des entsprechenden Ausgangsmaterials beträgt. Bei der erfindungsgemäß besonders bevorzugten Verwendung der Alkoxylierungsmittel in äquivalenten Mengen, bezogen auf die in den Ausgangsmaterialien vorliegenden Carboxylgruppen, gelingt im allgemeinen durch das erfindungsgemäße Verfahren eine Verringerung der Säurezahl auf weniger als 10 % des Ausgangswertes.

Für die erfindungsgemäße Verwendung geeignete Polyisocyanate sind insbesondere die sogenannten Lackpolyisocyanate des Standes der Technik, deren Herstellung beispielsweise in US-PS-3 124 605, US-PS-3 358 010, US-PS-3 903 126, US-PS-3 903 127, US-PS-3 976 622, US-PS-3 645 979 oder US-PS-3 919 218 bzw. in GB-PS-1 060 430, GB-PS-1 234 972, GB-PS-1 506 373 oder GB-PS-1 458 564 beschrieben ist.

Vorzugsweise handelt es sich bei diesen Lackpolyisocyanaten um Biuretgruppen, Urethangruppen oder Isocyanuratgruppen aufweisende Polyisocyanate auf Basis einfacher, handelsüblicher Diisocyanate wie Hexamethylendiisocyanat, 2,4- und/oder 2,6-Diisocyanatotoluol, 2,4'- und/oder 4,4'-Diisocyanato-dicyclohexylmethan oder Isophorondiisocyanat.

Die Biuretgruppen aufweisenden Polyisocyanate stellen beispielsweise Umsetzungsprodukte von Hexamethylendiisocyanat mit Wasser, Aminen oder mit Wasser abspaltenden Verbindungen dar. Es handelt sich hierbei insbesondere um Gemische von Tris-(isocyanatohexyl)-biuret mit seinen höheren Homologen. Diese Biuretpolyisocyanate sind die besonders bevorzugt einzusetzenden Lackpolyisocyanate.

Die Urethangruppen enthaltenden Polyisocyanate stellen insbesondere Umsetzungsprodukte von 2,4- und/oder 2,6-Di-isocyanatotoluol oder von Isophorondiisocyanat mit unterschüssigen Mengen an mehrwertigen Alkoholen, insbesondere Trimethylolpropan, gegebenenfalls im Gemisch mit Propandiolen bzw. Butandiolen, dar.

Bei den Isocyanuratgruppen aufweisenden Lackpolyisocyanaten handelt es sich vorzugsweise um Isocyanatgruppen aufweisende Trimerisate bzw. Mischtrimerisate der oben beispielhaft genannten einfachen Diisocyanate.

Grundsätzlich ist es auch möglich, die Isocyanatkomponenten in mit Blockierungsmitteln für Isocyanatgruppen wie z. B. Phenolen, Oximen wie Cyclohexanonoxim, ε-Caprolactam, Malonsäurediethylester oder Acetessigsäureethylester blockierter Form einzusetzen, so daß hitzevernetzbare Einbrennlacke resultieren.

Bei der erfindungsgemäßen Verwendung der erfindungsgemäßen Verfahrensprodukte, insbesondere bei der Herstellung von Zweikomponenten-Polyurethanlacken, werden die erfindungsgemäßen Verfahrensprodukte und die beispielhaft genannten Lackpolyisocyanate in solchen Mengen eingesetzt, daß auf jede Hydroxylgruppe der erfindungsgemäßen Verfahrensprodukte 0,5 bis 2, vorzugsweise 0,7 bis 1,3, gegebenenfalls blockierte Isocyanatgruppen entfallen.

Bei der erfindungsgemäßen Verwendung können neben den erfindungsgemäßen Verfahrensprodukten selbstverständlich weitere, aus der Polyurethanlackchemie bekannte Reaktionspartner für organische Polyisocyanate mitverwendet werden. Selbstverständlich können bei der erfindungsgemäßen Verwendung alle aus der Polyurethanlacktechnologie üblichen Hilfs- und Zusatzmittel wie z. B. Lösungsmittel, Verlaufmittel, viskositätskontrollierende Zusätze, Mattierungsmittel, Beschleuniger, Pigmente oder Füllstoffe mitverwendet werden.

Bei der Herstellung von Lacküberzügen unter erfindungsgemäßer Verwendung der erfindungsgemäßen Verfahrensprodukte kann nach allen beliebigen Methoden der Lacktechnologie wie z. B. Spritzen, Streichen, Tauchen, Drucken oder Walzen vorgegangen werden, wobei Substrate beliebiger Art wie z. B. Metalle, Holz, Mauerwerk, Beton, Glas, Keramik, Kunststoffe, Textilien oder Papier beschichtet werden können. Die gebrauchsfertigen Zweikomponenten-Polyurethanlacke zeichnen sich auch bei Verwendung von Lackpolyisocyanaten mit freien Isocyanatgruppen durch lange Standzeiten und schnelle Trocknungszeiten, sowie guten Verlauf und Farbtreue bzw. Lichtechtheit und hervorragende mechanische Eigenschaften der mit ihnen erhaltenen Beschichtungen aus. Besonders hervorzuheben ist auch die ausgezeichnete Verdünnbarkeit, insbesondere von Zweikomponenten-Polyurethanlacken auf Basis der erfindungsgemäß modifizierten Copolymerisate der Acrylsäure und/oder Methacrylsäure und den beispielhaft genannten Lackpolyisocyanaten mit aromatischen Kohlenwasserstoffen wie z. B. Toluol oder Xylol.

Bei Verwendung von Lackpolyisocyanaten mit freien Isocyanatgruppen erfolgt die Aushärtung der Lacküberzüge bei 20 bis 140°C, bevorzugt bei 20 bis 60°C, während bei Verwendung von blockierten Polyisocyanaten Einbrennlacke resultieren, die bei 120 bis 180°C ausgehärtet werden.

Die nachfolgenden Beispiele dienen der weiteren Erläuterung der Erfindung. Alle Prozentangaben beziehen sich auf Gewichtsprozente, sofern nichts anderslautendes vermerkt ist.

**Beispiele**

In den nachfolgenden Beispielen werden folgende erfindungsgemäße Katalysatoren eingesetzt:

**Katalysator I**

In einem 2 l-Rundkolben werden 780 g 2-Mercaptoethanol und 545 g d.l-Limonen unter gleichzeitigem Einleiten von Luft 24 Stunden bei Raumtemperatur gerührt. Danach destilliert man überschüssiges Mercaptoethanol im Vakuum ab. Man erhält ein Diaddukt von Mercaptoethanol an Limonen mit folgenden analytischen Daten.

OH-Zahl: 381
Viskosität: 25°C/1300 mPas

**Katalysator II**

5856 Gew.-Teile Thiodiglykol werden mit 29,3 Gew.-Teilen 85 %-iger phosphoriger Säure versetzt. Anschließend wird unter Durchleiten von Stickstoff unter Rühren auf 180°C erhitzt und diese Reaktionstemperatur aufrechterhalten bis 765 ml Wasser abgespalten sind. Anschließend wird während 3 Stunden bei 180°C Wasserstrahlvakuum angelegt. Man erhält so in 91 %-iger Ausbeute ein Reaktionsprodukt der OH-Zahl 110 und eines mittleren Molekulargewichts von etwa 1000.

In den nachfolgenden Beispielen wurden die in folgender Tabelle bezüglich ihrer Zusammensetzung und bezüglich ihrer Eigenschaften zusammengestellten Polymerisatharze A bis D verwendet. Die Herstellung der Polymerisatharze aus den aus der Tabelle ersichtlichen Ausgangsmaterialien erfolgte nach folgender allgemeiner Herstellungsvorschrift:

In einem geeigneten Reaktionsgefäß, beispielsweise in einem mit Gaseinleitungsrohr und Rührflußkühler versehenen Rührkessel werden ca. 90 % der angegebenen Menge Butylacetat vorgelegt und auf 120°C erhitzt. Bei dieser Temperatur wird dann unter Stickstoffatmosphäre das Gemisch der Monomeren und gleichzeitig eine Lösung des Mercaptoethanols und des t-Butylperoctoats im restlichen Butylacetat während eines Zeitraums von 5 h unter Rühren allmählich zudosiert. Anschließend wird noch während 3 h unter Stickstoff bei 120°C nachgerührt.

Nach dem Abkühlen des Reaktionsgemischs liegt eine klare Lösung des Polymerisats in Butylacetat vor. Diese Lösung wird nachstehend als "Polymerisatharz" bezeichnet.

| Polymersatharz | Gew.-Teile | Gew.-Teile | Gew.-Teile | Gew.-Teile |
|---|---|---|---|---|
| Styrol | 20,91 | 19,66 | 19,38 | 18,13 |
| Methylmethacrylat | 20,91 | 19,66 | 19,38 | 18,13 |
| Acrylsäure | 12,80 | 12,80 | 15,87 | 15,87 |
| 2-Ethylhexylacrylat | 2,88 | 2,88 | 2,87 | 2,87 |
| Mercaptoethanol | 0,50 | 3,00 | 0,50 | 3,00 |
| tert.-Butylperoctoat | 3,00 | 3,00 | 3,00 | 3,00 |
| Butylacetat | 39,00 | 39,00 | 39,00 | 39,00 |
| Kennzahlen: | | | | |
| Festgehalt % | 60,5 | 59,8 | 60,0 | 59,6 |
| Viskosität (mPa.s/20°C) | 102380 | 8682 | 342900 | 21360 |
| Dichte (g/ml) | 1,035 | 1,035 | 1,038 | 1,062 |
| Säurezahl | 100 | 100 | 118 | 122 |
| Farbzahl (APHA, DIN 54409) | 15 | 15 | 20 | 10 |
| OH-Zahl | 4 | 21 | 4 | 21 |

**Beispiel 1**

In einem 10 l Kolben mit Stickstoffüberlagerung wurden 6 000 g Polymerisatharz A und 65,7 g Katalysator I vorgelegt. Nach gründlichem Spülen mit Stickstoff wurden bei 110 bis 120°C und 1,5 bar Stickstoff 504 g Ethylenoxid innerhalb 3 Stunden zudosiert. Nach 6 Stunden Nachreaktion bei 130°C wurden die noch im Produkt verbliebenen 100 ppm Ethylenoxid durch Rückflußkochen unter Vakuum (50°C und 60 mm Hg) entfernt. Man erhielt ein farbloses, ethylenoxidfreien, Hydroxylgruppen aufweisendes Polyacrylat mit folgenden Eigenschaften:

Festgehalt Gew.-%: 65,0
$n_{25°C}$ (mPas): 2214
Dichte (g/ml, 25°C): 1,04
OH-Zahl (mg KOH/g): 94,6
Säure-Zahl (mg KOH/g): 5,2
Farbzahl (APHA): 25

**Beispiel 2**

Wie in Beispiel 1 wurden 6 000 g Polymerisatharz B und 33,4 g Katalysator I mit 683 g Propylenoxid umgesetzt. Die Rohlösung enthält noch ca. 500 ppm Propylenoxid, welches wie in Beispiel 1 entfernt wurde. Man erhielt ein schwach gelb gefärbtes Polyacrylat mit folgenden Eigenschaften:

Festgehalt Gew.-%: 64,1
$n_{25°C}$ (mPas): 575
Dichte (g/ml, 25°C): 1,04
OH-Zahl (mg KOH/g): 106
Säurezahl (mg KOH/g): 6,0
Farbzahl (APHA): 50

**Beispiel 3**

3 000 g Polymerisatharz A (5,35 Mol Carboxylgruppen) wurden zusammen mit 15 g Katalysator I auf 110°C erhitzt. Im Verlauf von 1 Stunde wurden 396 g (5,35 Mol) Glycidylalkohol zugetropft. Im Verlauf von 10 Stunden bei 110°C sank die Säurezahl auf 15,3 mg KOH/g ab. Nun wurden 40 g (10 % Überschuß) Glycidylalkohol nachgesetzt und weitere 10 Stunden gerührt. Danach betrug die Säurezahl 5,8 mg KOH/g und der Restgehalt an Glycidylalkohol 0,05 %. Durch Verdünnen mit 260 g Butylacetat wurde der ursprüngliche Feststoffgehalt wieder eingestellt. Man erhielt eine schwachgelbe, viskose Lösung mit folgenden Eigenschaften:

Festgehalt Gew.-%: 60,5
$n_{25°C}$ (mPas): 20 000
OH-Zahl (mg KOH/g): 151
Säurezahl (mg KOH/g): 5,2
Farbzahl (APHA): 60

**Beispiel 4**

Wie im Beispiel 1 wurden 6 000 g Polymerisatharz B und 20 g Katalysator II mit 526 g Ethylenoxid umgesetzt. Die Rohlösung war nach der Reaktion frei von Ethylenoxid und hatte folgende Eigenschaften:

Festgehalt Gew.-%: 63,2
$n_{25°C}$ (mPas): 508
Dichte (g/ml, 25°C): 1,06
OH-Zahl (mg KOH/g): 104
Säure-Zahl (mg KOH/g): 4,9
Farbzahl (APHA): 20

**Beispiel 5**

Wie in Beispiel 1 wurden 6 000 g Polymerisatharz C und 67 g Katalysator I mit 648 g Ethylenoxid umgesetzt. Die Rohlösung war nach der Reaktion frei von Ethylenoxid und hatte folgende Eigenschaften:

Festgehalt Gew.-%: 65,0
$n_{25°C}$ (mPas): 508
Dichte (g/ml, 25°C): 1,03
OH-Zahl (mg KOH/g): 116
Säure-Zahl (mg KOH/g): 4,5
Farbzahl (APHA): 20

**Beispiel 6**

Wie in Beispiel 1 wurden 6 000 g Polymerisatharz D und 35 g Katalysator I mit 876 g Propylenoxid umgesetzt. Nach 10 Stunden Nachreaktion bei 130°C erhielt man ein schwach gelbes Produkt, welches noch 0,3 % Propylenoxid enthielt. Das Propylenoxid wurde durch Rückflußkochen unter Vakuum entfernt und man erhielt ein Produkt mit folgenden Eigenschaften:

Festgehalt Gew.-%: 64,8
$n_{25°C}$ (mPas): 725
Dichte (g/ml, 25°C): 1,04
OH-Zahl (mg KOH/g): 120
Säurezahl (mg KOH/g): 8,2
Farbzahl (APHA): 40

**Beispiel 7**

Wie in Beispiel 1 wurden 6 000 g Polymerisatharz D und 20 g Katalysator I mit 689 g Ethylenoxid umgesetzt. Die Rohlösung enthielt noch 200 ppm Ethylenoxid, welches wie in Beispiel 1 entfernt wurde. Man erhielt ein helles Polyacrylat mit folgenden Eigenschaften:

Festgehalt Gew.-%: 63,9
$n_{25°C}$ (mPas): 635
Dichte (g/ml, 25°C): 1,07
OH-Zahl (mg KOH/g): 122
Säurezahl (mg KOH/g): 0,6
Farbzahl (APHA): 20

**Patentansprüche**

1. Verfahren zur Herstellung von Hydroxylgruppen aufweisenden Copolymerisaten durch Umsetzung von Carboxylgruppen enthaltenden Copolymerisaten, die Acrylsäure und/oder Methacrylsäure einpolymerisiert enthalten, mit Alkylenoxiden in einem Äquivalentverhältnis von Alkylenoxid zu Carboxylgruppen von 0,5 : 1 bis 1,5 : 1 in Gegenwart von 0,1 bis 3 Gew.-%, bezogen auf das gesamte Reaktionsgemisch, an Katalysatoren, dadurch gekennzeichnet, daß man als Katalysatoren

a1) zwei Thioethergruppen aufweisende Anlagerungsprodukte von (i) Mercaptoalkonolen der Formel:

```
    OH
    |
R-CH-CH2-SH
```

an (ii) zweifach ungesättigte Terpenkohlenwasserstoffe, und/oder

a2) Kondensationsprodukte eines maximalen Molekulargewichts von 5 000 und einem Gehalt an Schwefel in Form von Thioethergruppen von 15 bis 30 Gew.-% derartiger Anlagerungsprodukte mit sich selbst oder mit anderen mehrwertigen Alkoholen des Molekulargewichtsbereichs 62 bis 200, ausgewählt aus der Gruppe bestehend aus gegebenenfalls Thioetherbrücken aufweisenden Alkandiolen und dreiwertigen aliphatischen Alkoholen, mit der Maßgabe, daß die schwefelfreien mehrwertigen Alkohole, falls überhaupt, in einer Menge

von bis zu 50 Hydroxyläquivalent-%, bezogen auf alle bei der Kondensationsreaktion einzusetzenden mehrwertigen Alkohole, eingesetzt werden, und/oder

b) höhermolekulare Thioether des Molekulargewichtsbereichs 500 bis 5 000, wie sie durch Kondensation von Thiodiglykolen der Formel:

$$R'-\overset{OH}{\overset{|}{CH}}-CH_2-S-CH_2-\overset{OH}{\overset{|}{CH}}-R'$$

gegebenenfalls im Gemisch mit bis zu 50 Hydroxyläquivalent-%, bezogen auf dieses Gemisch, anderer Polyhydroxylverbindungen des Molekulargewichtsbereichs 62 bis 200 der unter a2) genannten Art genannten Art erhalten werden,

verwendet, wobei

R und R' für gleiche oder verschiedene Reste stehen und Wasserstoff oder einen Methylrest bedeuten.

2. Verfahren gemäß Anspruch 1, dadurch gekennzeichnet, daß man als Carboxylgruppen enthaltende Copolymerisate Copolymerisate der Acrylsäure und/oder Methacrylsäure mit anderen olefinisch ungesättigten Monomeren verwendet, in welchen

7 bis 40 Gew.-% Acrylsäure und/oder Methacrylsäure,

0 bis 88 Gew.-% Styrol, Acrylnitril und/oder Methacrylnitril,

5 bis 80 Gew.-% Acrylsäurealkylester mit 1 bis 12 Kohlenstoffatomen im Alkylrest und/oder Methacrylsäurealkylester mit 1 bis 12 Kohlenstoffatomen im Alkylrest in copolymerisierter Form vorliegen, wobei sich die genannten Prozentsätze auf die Gesamtmenge des bei der Herstellung der Copolymerisate eingesetzten Monomerengemischs beziehen und sich jeweils zu 100 ergänzen, und welche ein mittleres, nach der Methode der Gelpermeationschromatographie bestimmtes Molekulargewicht von 1 000 bis 80 000 und eine molekulare Uneinheitlichkeit U von 0,5 bis 15,0 aufweisen.

3. Verfahren gemäß Anspruch 1 und 2, dadurch gekennzeichnet, daß man die Alkoxylierungsreaktion bei einer Temperatur von 60 - 160°C durchführt.

4. Verfahren gemäß Anspruch 1 bis 3, dadurch gekennzeichnet, daß man als Alkylenoxid Ethylenoxid, Propylenoxid und/oder Glycidylalkohol verwendet.

5. Verfahren gemäß Anspruch 1 bis 4, dadurch gekennzeichnet, daß man die Alkylenoxide in solchen Mengen verwendet, die einem Äquivalentverhältnis von Alkylenoxid zu Carboxylgruppen von 0,5 : 1 bis 1,5 : 1 entsprechen.

6. Verwendung der gemäß Anspruch 1 bis 5 erhaltenen, Hydroxylgruppen aufweisenden, Alkoxylierungsprodukte als Reaktionspartner für organische Polyisocyanate in gegebenenfalls mit Blockierungsmitteln für Isocyanatgruppen blockierter Form bei der Herstellung von Polyurethankunststoffen.

## Claims

1. A process for the production of hydroxyl-group-containing copolymers by reaction of carboxyl-group-containing copolymers containing acrylic acid and/or methacrylic acid in copolymerized form with alkylene oxides in an equivalent ratio of alkylene oxide to carboxyl groups of from 0.5 : 1 to 1.5 : 1 in the presence of from 0.1 to 3 % by weight, based on the reaction mixture as a whole, of catalysts, characterized in that the catalysts used are

a1) adducts containing two thioether groups of (i) mercaptoalkonols corresponding to the following formula:

$$R-\overset{OH}{\overset{|}{CH}}-CH_2-SH$$

with (ii) di-unsaturated terpene hydrocarbons and/or

a2) condensates - having a molecular weight of at most 5,000 and a sulfur content in the form of thioether groups of from 15 to 30 % by weight - of such adducts on their own or with other polyhydric alcohols having a molecular weight in the range from 62 to 200 selected from the group consisting of alkanediols optionally containing thioether bridges and trihydric aliphatic alcohols, with the proviso that the sulfur-free polyhydric alcohols are used - if at all - in a quantity of up to 50 hydroxyl equivalent-%, based on all the polyhydric alcohols to be used in the condensation reaction, and/or

b) relatively high molecular weight thioethers having a molecular weight in the range from 500 to 5,000, of the type obtained by condensation of thiodiglycols corresponding to the following formula:

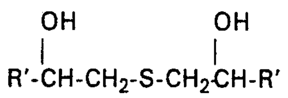

optionally in admixture with up to 50 hydroxyl eqivalent-%, based on this mixture, of other polyhydroxyl compounds having a molecular weight in the range from 62 to 200 of the type mentioned in a2),

R and R' in the above formulae being the same or different and representing hydrogen or a methyl radical.

2. A process as claimed in claim 1, characterized in that copolymers of acrylic acid and/or methacrylic acid with other olefinically unsaturated monomers, in which

from 7 to 40 % by weight acrylic acid and/or methacrylic acid,

from 0 to 88 % by weight styrene, acrylonitrile and/or methacrylonitrile,

from 5 to 80 % by weight alkyl acrylates containing 1 to 12 carbon atoms in the alkyl radical and/or alkyl methacrylates containing 1 to 12 carbon atoms in the alkyl radical are present in copolymerized form, the percentages mentioned being based on the total quantity of monomer mixture used in the production of the copolymer and totalling 100, and which have an average molecular weight, as determined by gel permeation chromatography, of from 1,000 to 80,000 and a molecular non-uniformity U of from 0.5 to 15.0.

3. A process as claimed in claims 1 and 2, characterized in that the alkoxylation reaction is carried out at a temperature of 60 to 160°C.

4. A process as claimed in claims 1 to 3, characterized in that ethylene oxide, propylene oxide and/or glycidyl alcohol is used as the alkylene oxide.

5. A process as claimed in claims 1 to 4, characterized in that the alkylene oxides are used in quantities corresponding to an equivalent ratio of alkylene oxide to carboxyl groups of from 0.5 : 1 to 1.5 : 1.

6. The use of the hydroxyl-group-containing alkoxylation products obtained by the process claimed in claims 1 to 5 as reactants for organic polyisocyanates, optionally blocked with blocking agents for isocyanate groups, in the production of polyurethane plastics.

## Revendications

1. Procédé de préparation de copolymères comportant des groupes hydroxyle par réaction de copolymères comportant des groupes carboxyle et contenant de l'acide acrylique et/ou de l'acide méthacrylique polymérisés en leur sein, avec des oxydes d'alkylène dans un rapport d'équivalents de 0,5 : 1 à 1,5 : 1 entre l'oxyde d'alkylène et les groupes carboxyle, en présence de 0,1 à 3 % en poids (rapporté à tout le mélange réactionnel) de catalyseurs, caractérisé en ce que, comme catalyseurs, on utilise:

a1) des produits de fixation (comportant deux groupes thioéther) de (i) mercapto-alconols de formule:

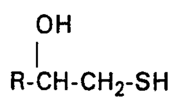

sur (ii) des hydrocarbures terpéniques à double insaturation, et/ou

a2) des produits de condensation d'un poids moléculaire maximum de 5.000 et ayant une teneur en soufre (sous forme de groupes thioéther) de 15 a 30 % en poids, de tels produits de fixation avec eux-mêmes ou avec d'autres alcools polyvalents d'un poids moléculaire se situant dans l'intervalle allant de 63 à 200, choisis parmi le groupe comprenant des alcane-diols comportant éventuellement des ponts thioéther, et des alcools aliphatiques trivalents, avec cette réserve que les alcools polyvalents exempts de soufre sont, si tant est, utilisés en une quantité allant jusqu'à 50 % d'équivalents hydroxyle, rapporté à tous les alcools polyvalents devant être utilisés lors de la réaction de condensation, et/ou

b) des thioéthers d'un poids moléculaire très élevé se situant dans l'intervalle allant de 500 à 5.000, que l'on obtient par condensation de thiodiglycols de formule:

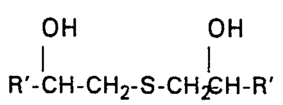

éventuellement en mélange avec jusqu'à 50 % d'équivalents hydroxyle, rapporté à ce mélange, d'autres composés polyhydroxyle d'un poids moléculaire se situant dans l'intervalle allant de 63 à 200 du type mentionné sub a2),

R et R' représentant des radicaux identiques ou différents et un atome d'hydrogène ou un radical méthyle.

2. Procédé selon la revendication 1, caractérisé en ce que, comme copolymères contenant des groupes carboxyle, on utilise des copolymères de l'acide acrylique et/ou de l'acide méthacrylique avec d'autres

monomères à insaturation oléfinique, dans lesquels:
7 à 40 % en poids d'acide acrylique et/ou d'acide méthacrylique,
0 à 88 % en poids de styrène, d'acrylonitrile et/ou de méthacrylonitrile,
5 à 80 % en poids d'un ester alkylique de l'acide acrylique contenant 1 à 12 atomes de carbone dans le radical alkyle et/ou d'un ester alkylique de l'acide méthacrylique contenant 1 à 12 atomes de carbone dans le radical alkyle, se présentent sous forme copolymérisée, les pourcentages mentionnés se rapportant à la quantité totale du mélange de monomères utilisé lors de la préparation des copolymères et se complétant chaque fois à 100, tout en ayant un poids moléculaire moyen (déterminé selon la méthode de chromatographie par perméation du gel) de 1.000 à 80.000, ainsi qu'un défaut d'homogénéité moléculaire U de 0,5 à 15,0.

3. Procédé selon les revendications 1 et 3, caractérisé en ce qu'on effectue la réaction d'alcoxylation à une température de 60 à 160°C.

4. Procédé selon les revendications 1 à 3, caractérisé en ce que, comme oxyde d'alkylène, on utilise l'oxyde d'éthylène, l'oxyde de propylène et/ou l'alcool glycidylique.

5. Procédé selon les revendications 1 à 4, caractérisé en ce qu'on utilise les oxydes d'alkylène en quantités correspondant à un rapport d'équivalents de 0,5 : 1 à 1,5 : 1 entre l'oxyde d'alkylène et les groupes carboxyle.

6. Utilisation des produits d'alcoxylation comportant des groupes hydroxyle et obtenus selon les revendications 1 à 5, comme partenaires réactionnels pour des polyisocyanates organiques sous une forme éventuellement bloquée avec des agents de blocage pour les groupes isocyanate lors de la fabrication de matières synthétiques de polyuréthanes.